# EUROPEAN PATENT SPECIFICATION

(11) **EP 2 541 743 B1**
(45) Date of publication and mention of the grant of the patent: **12.06.2019**
(21) Application number: 11744647.6
(22) Date of filing: 16.02.2011
(51) Int. Cl.: H02K 35/02

(54) **OSCILLATING POWER GENERATOR**
OSZILLIERENDER STROMGENERATOR
GÉNÉRATEUR ÉLECTRIQUE OSCILLANT

(30) Priority: 31.05.2010 JP 2010125117; 22.02.2010 JP 2010035856
(43) Date of publication of application: 02.01.2013
(73) Proprietor: Brother Kogyo Kabushiki Kaisha, Nagoya-shi, Aichi 467-8561 (JP)
(72) Inventor: IIJIMA, Ryuta, Nagoya-shi, Aichi 467-8561 (JP); SASAKI, Ichiro, Nagoya-shi, Aichi 467-8561 (JP); TAKAHASHI, Ryoya, Nagoya-shi, Aichi 467-8561 (JP)
(74) Representative: J A Kemp
(86) International application number: PCT/JP2011/053217
(87) International publication number: WO 2011/102361

(56) References cited:
- CN-Y- 201 018 388
- JP-A- 10 323 006
- JP-A- 2003 534 759
- JP-A- 2005 094 832
- JP-A- 2005 094 832
- JP-A- 2006 296 144
- US-A1- 2008 218 128
- US-B1- 6 664 759
- US-B1- 6 664 759
- US-B1- 7 148 583

## Description

### Technical Field

The present invention relates to a vibration-based power generator that generates power based on vibration.

### Background Art

In a known art, a vibration-based power generator is proposed that converts kinetic energy generated by vibration into electrical energy. In the vibration-based power generator, an induced electric current is generated in a coil by a permanent magnet vibrating inside the coil. The induced electric current is stored in an electricity storage device, such as a condenser. By taking out the electric current that is stored in the electricity storage device, the vibration-based power generator can supply the electric current to a load. The power generation efficiency of the vibration-based power generator improves in accordance with an increase in a stroke size when the permanent magnet vibrates.

In Patent Literature 1, for example, a power generator is proposed that is provided with a rectifier unit that includes a permanent magnet, a coil and a bridge rectifier circuit, and a condenser. The permanent magnet and the coil are provided in approximately half of an area inside a casing. The rectifier unit is provided in the remaining half of the area. An alternating current is induced in the coil by vibration of the permanent magnet. The alternating current is converted to a direct current by the bridge rectifier circuit. The direct current is stored in the condenser.

### Patent Literature

Patent Literature 1: Japanese Laid-Open Patent Publication No. 7-177718

US 7,148,583 describes a method to convert motion into electrical energy. These electrical power generators are made compatible with standard batteries so that they can support operations of existing battery powered portable appliances with no or minimal modifications. Electrical power generators of the present invention are therefore more convenient to use than conventional batteries while reducing the needs to replace or recharge batteries. Environment friendly methods are also introduced for generating electrical power. CN 201 018 388 describes a self-generating battery which comprises a displacement generating body and an energy storage unit. The displacement generating body generates the electric energy in accordance with the displacement and comprises a pipe body, an induced magnetic piece and a coil. The induced magnetic piece is arranged in the pipe body and moves back and forth in the pipe body in accordance with the displacement, and the coil is arranged on the external surface of the pipe body and induced to generate the electric energy through the induced magnetic piece moving back and forth in order to implement the electricity transmission for the energy storage unit. US 6,664,759 describes a manually rechargeable power system includes a generator operable to generate electrical energy. A capacitor is operable to store the electrical energy generated by the generator. The generator and/or capacitor may be housed in a housing configured to replicate a size and a shape of one or multiple batteries.

### Summary of Invention

### Problem to Be Solved by the Invention

However, in the above-described devices, the area housing the rectifier unit limits a movable range of the permanent magnet, and shortens the stroke of the permanent magnet at the time of vibration. Thus, a power generation efficiency of the power generator may be decreased. In a case where a size of the vibration-based power generator is limited, such as a case in which the rectifier unit is housed inside a case having a shape prescribed by standard specifications, an impact of the area occupied by the rectifier unit on the power generation efficiency may be evident.

It is an object of the present invention to provide a vibration-based power generator having high power generation efficiency by making a movable range of a permanent magnet as large as possible.

### Solution to Problem

A vibration-based power generator according to a first aspect of the present invention as defined in appended claim 1.

According to the first aspect, the vibration-based power generator includes the first housing and the second housing. The first housing houses the first power generation unit. The second housing houses the electricity storage portion. Thus, an
area housing the first power generation unit can be made larger. A stroke of the permanent magnet that is moved inside the coil can be made larger, and thus the large induced electric current can be generated in the coil. The large electric current can be stored in the electricity storage portion. In this way, the vibration-based power generator can increase an amount of the electric current that can be stored as a result of reciprocating motion, and it is possible to improve power generation efficiency. Further, the two electrode terminals provided on the first housing are conductively connected. Thus, in a case where one of the electrode terminals and the negative terminal are conductively connected, it is possible to take electric power from the other electrode terminal and the positive terminal. Alternatively, in a case where the one of the electrode terminals and the positive terminal are conductively connected, it is possible to take electric power from the other electrode terminal and the negative terminal.

In addition, in the first aspect, the first housing may be conductive. The two electrode terminals may be conductively connected by being connected to the first housing. By connecting the electrode terminals to the first housing, it is possible to easily cause the electrode terminals to be conductively connected to each other.

In addition, in the first aspect, the first housing may be magnetic. Accordingly, the lines of magnetic flux irradiated from the permanent magnet can be absorbed by the first housing. It is possible to increase the magnetic flux density inside the first housing, and it is thus possible to further increase the induced electric current generated in the coil. The power generation efficiency of the vibration-based power generator can be further improved.

In addition, in the first aspect, a second power generation unit may be provided that is different from the first power generation unit and that includes at least a tubular shaped member around which a coil is wound and a permanent magnet that is provided such that the permanent magnet can be moved reciprocally in the tubular shaped member, wherein the second power generation unit may be housed in the second housing. Accordingly, in addition to the first power generation unit, the vibration-based power generator can also generate power using the second power generation unit. The vibration-based power generator can efficiently store even more electric current in the electricity storage portion.

In addition, in the first aspect, the rectifier portion may be housed in the second housing. The rectifier portion is housed in the second housing, and thus an area housing the first power generation unit can be maintained in a large state. A stroke of the permanent magnet can be made larger, and thus it is possible to generate the large induced electric current in the coil. The vibration-based power generator can store even larger electric current in the electricity storage portion, and power generation efficiency can be further improved.

In addition, in the first aspect, the first housing may be provided in a plurality, and the second housing may house the rectifier portion corresponding to each of first power generation units housed in the plurality of first housings. The first power generation unit can generate power in each of the plurality of first housings, and thus the vibration-based power generator can efficiently store even more electric current in a short time period. The rectifier portions corresponding to each of the first power generation units may be housed together in the second housing. Thus, the area housing the first power generation unit can be maintained in a large state. The vibration-based power generator can further improve power generation efficiency.

In addition, in the first aspect, the first housings may be provided in a plurality, and the rectifier portion may be housed in each of the plurality of first housings. The first power generation unit can generate power in each of the plurality of first housings, and thus the vibration-based power generator can efficiently store even more electric current in a short time period. The rectifier portion corresponding to each of the first power generation units may be housed in the first housing. By connecting the plurality of first housings each provided with the first power generation unit and the rectifier portion, it is possible to easily increase a power generation amount of the vibration-based power generator.

In addition, in the first aspect, the two electrode terminals may each have the same shape as the positive terminal. Accordingly, irrespective of the orientation of the first housing, an electrode that is fitted to an external device can have the same shape. In a case where the electrode terminal of the first housing is in contact with the side of the positive terminal of the second housing and the first housing and the second housing are connected in series and used, the vibration-based power generator can be built into the external device and used as a power source, irrespective of the orientation of the first housing.

In addition, in the first aspect, a storage portion that is adapted to store the supply path may be provided in an internal portion or on an outer periphery of one of the first housing and the second housing. Accordingly, it is possible to secure a large movement area of the permanent magnet, and it is thus possible to generate the large induced electric current in the coil. As a result, highly efficient power generation can be performed. Further, with respect to the supply path, even in a case where a length of the supply path is necessary when arranging the first housing and the second housing in accordance with a usage, the excessive supply path can be stored using the storage portion after the arrangement. Therefore, a user can use the vibration-based power generator in a state in which the supply path does not obstruct usage.

In addition, in the first aspect, the storage portion may be provided in the internal portion or on the outer periphery of the second housing. Accordingly, the permanent magnet housed in the first housing may be moved inside the first housing while securing a movable area to a maximum extent. In this way, the large induced electric current may be generated in the coil. It is thus possible to realize the vibration-based power generator having high power generation efficiency.

In addition, in the first aspect, the storage portion may be provided on the outer periphery of one of the first housing and the second housing such that the supply path can be placed, the storage portion may have a recessed portion provided with a groove that is deeper than a diameter of the supply path. Accordingly, an excessive conductive wire may be stored on an inner side of the outer periphery of the housing by the recessed portion provided on the outer periphery of the housing. Thus, after arranging the vibration-based power generator, it is possible to store the conductive wire in accordance with the usage.

In addition, in the first aspect, the one of the first housing and the second housing to which the storage portion may be provided has a cylindrical shape, and the recessed portion of the storage portion may be provided along the outer periphery of the one of the first housing and the second housing such that the supply path can be wound thereon. Accordingly, an excessive conductive wire may be stored by being wound onto the storage portion along the outer periphery of the housing. Thus, after placing the first housing and the second housing in accordance with the usage, it is possible to easily store the supply path simply by rotating the housing.

In addition, in the first aspect, one of a convex portion and a planar portion may be formed on at least one end side of a cylindrical shape of the first housing, one of a planar portion and a convex portion may be formed on at least one end side of a cylindrical shape of the second housing, the supply path may be pulled from one end side, of one housing of the first housing and the second housing, on which the convex portion is formed and from one end side, of the other housing of the first housing and the second housing, on which the planar portion is formed, and the storage portion may be provided in a vicinity of the one end side from which the supply path is pulled. Accordingly, the supply path can be reasonably wired and stored so as to be appropriate to a layout with a high likelihood of usage, and the vibration-based power generator having a high degree of convenience can be realized.

### Brief Description of Drawings

FIG. 1 is a diagram showing a structure of a vibration-based power generator 1 according to a first embodiment.
FIG. 2 is a diagram showing a structure of a vibration-based power generator 2 according to a second embodiment.
FIG. 3 is a diagram showing a structure of a vibration-based power generator 3 according to a third embodiment.
FIG. 4 is a diagram showing a structure of a vibration-based power generator 4 according to a fourth embodiment.
FIG. 5 is a diagram showing a structure of a vibration-based power generator 5 according to a fifth embodiment.
FIG. 6 is a perspective view of a vibration-based power generator 6 according to a sixth embodiment.
FIG. 7A is a diagram showing a vertical cross-section of a storage end portion 136a of the vibration-based power generator 6.
FIG. 7B is a diagram showing a vertical cross-section of a recessed portion 136b of the vibration-based power generator 6.
FIG. 8A is a perspective view showing an arrangement of the vibration-based power generator 6 in a battery box 150.
FIG. 8B is a perspective view showing an arrangement of the vibration-based power generator 6 in the battery box 150.
FIG. 9 is a wiring diagram of the battery box 150 and the vibration-based power generator 6.
FIG. 10 is a perspective view showing a modified example of a storage portion of the vibration-based power generator 6 according to the sixth embodiment.

### Description of Embodiments

Hereinafter, vibration-based power generators (vibration-based power generators 1 to 6) according to embodiments of the present invention will be explained with reference to the drawings. The drawings referred to are used to explain technical features that can be used by the present invention. Structures of devices noted herein are not intended to be limited to these alone, and are simply explanatory examples.

### First embodiment

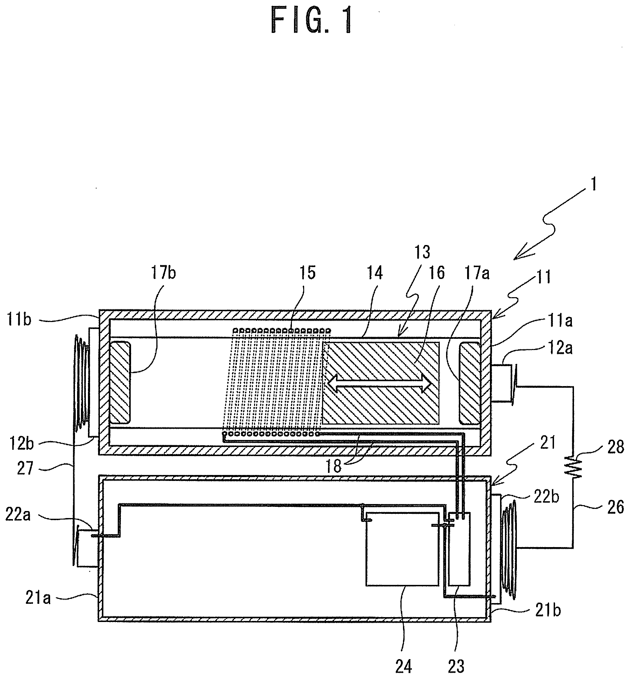

The vibration-based power generator 1 according to a first embodiment of the present invention will be explained with reference to FIG. 1. The left-right direction of the sheet is defined as the left-right direction of the vibration-based power generator 1. The vibration-based power generator 1 includes a first housing 11 and a second housing 21. A shape of the first housing 11 and the second housing 21 is substantially a cylindrical shape. For example, the first housing 11 and the second housing 21 each have a standardized shape for a dry battery, such as a D size battery, a C size battery, or an AA size battery. In FIG. 1, the first housing 11 and the second housing 21 are disposed such that the longitudinal direction thereof is the left-right direction. The first housing 11 and the second housing 21 may be arranged alongside each other such that their respective peripheral wall portions may be in proximity.

Electrode terminals are provided on both wall portions of substantially the cylindrical shape of the first housing 11. An electrode terminal 12a is provided on a first wall portion 11a, which is the right-side wall portion. An electrode terminal 12b is provided on a second wall portion 11b, which is the left-side wall portion. The first housing 11 has conductive properties. The electrode terminal 12a and the electrode terminal 12b are each connected to the first housing 11. As a result, the electrode terminal 12a and the electrode terminal 12b are conductively connected. Electrode terminals are provided on both wall portions of substantially the cylindrical shape of the second housing 21. A positive terminal 22a is provided on a first wall portion 21a, which is the left-side wall portion. A negative terminal 22b is provided on a second wall portion 21b, which is the right-side wall portion.

A known metal can be used as a material of the first housing 11. A resin etc. can be used as a material of the second housing 21. A known metal can be used as a material of the terminals 12a, 12b, 22a, and 22b. The electrode terminal 12a and the positive terminal 22a each have a standardized shape for a positive terminal of a dry battery. The electrode terminal 12b and the negative terminal 22b each have a standardized shape for a negative terminal of a dry battery.

The first housing 11 internally houses a power generation unit 13. The power generation unit 13 includes a tubular shaped member 14, a coil 15, and a permanent magnet 16. A shape of the tubular shaped member 14 is substantially a cylindrical shape. An outer diameter of the tubular shaped member 14 is slightly smaller than an inner diameter of the first housing 11. A length of the tubular shaped member 14 in the longitudinal direction is substantially the same as a length of the first housing 11 in the longitudinal direction. The coil 15 is wound around an outer surface of the tubular shaped member 14. The permanent magnet 16 is provided such that the permanent magnet 16 can move freely in the longitudinal direction inside the tubular shaped member 14. A shape of the permanent magnet 16 is substantially a columnar shape. An outer diameter of the permanent magnet 16 is slightly smaller than an inner diameter of the tubular shaped member 14.

A non-magnetic substance, such as an acryl resin, copper, aluminum, or brass, can be used as a material of the tubular shaped member 14. The shapes of the tubular shaped member 14 and the permanent magnet 16 are not limited to being a cylindrical shape. The shape of the tubular shaped member 14 and the permanent magnet 16 may be, for example, an elliptical cylindrical shape, a square column shape, or another polygonal column shape.

Buffer members 17a, 17b are provided on inner sides of wall portions at both ends of the tubular shaped member 14. The buffer member 17a is provided on the inner side of the wall portion on the right side. The buffer member 17b is provided on the inner side of the wall portion on the left side. In a case where the permanent magnet 16 is moved in the left-right direction, the permanent magnet 16 may come into contact with the buffer members 17a, 17b. The buffer members 17a, 17b lessen an impact on the wall portions in a case where the permanent magnet 16 is moved. A known material having elasticity can be used as a material of the buffer members 17a, 17b. Isoprene rubber, nitrile rubber, butadiene rubber, etc. can be used, for example.

The coil 15 is wound around a substantially central portion, in the left-right direction, of the outer peripheral surface of the tubular shaped member 14 and fixed, being wound in a direction orthogonal to the longitudinal direction of the tubular shaped member 14. Both ends of the coil 15 are connected to external wiring 18. Copper, for example, can be used as a material of the coil 15. The coil 15 may be wound, for example, around a whole periphery of the tubular shaped member 14.

A magnetization direction of the permanent magnet 16 is the same direction as the movement direction (the left-right direction in FIG. 1). The permanent magnet 16 may have a structure, for example, in which a plurality of permanent magnets are arranged such that poles having the same polarity faces each other.

The second housing 21 internally houses a rectifier portion 23 and an electricity storage portion 24. The external wiring 18 that extends from both the ends of the coil 15 is connected to an input portion of the rectifier portion 23. The rectifier portion 23 can convert an alternating current flowing through the external wiring 18 into a direct current. A diode bridge, for example, can be used as the rectifier portion 23. Of the rectifier portion 23, a direct current terminal portion is connected to the electricity storage portion 24 via wiring. The electricity storage portion 24 can store electric current that has been rectified by the rectifier portion 23. A condenser or a secondary battery can be used as the electricity storage portion 24, for example. The electricity storage portion 24 and the direct current terminal portion of the rectifier portion 23 are connected to the positive terminal 22a and the negative terminal 22b via wiring. The rectifier portion 23 can output the rectified electric current directly to the outside via the positive terminal 22a and the negative terminal 22b. The electricity storage portion 24 can output the stored electric current to the outside via the positive terminal 22a and the negative terminal 22b.

Operations of the vibration-based power generator 1 will be explained. The vibration-based power generator 1 may be attached to an external device such that the first housing 11 and the second housing 21 may be alongside each other. The electrode terminal 12a and the negative terminal 22b may be arranged on the same side. The electrode terminal 12b and the positive terminal 22a may be arranged on the same side. A connection terminal 27, which the external device includes, may be connected between the electrode terminal 12b and the positive terminal 22a. The electrode terminal 12b and the positive terminal 22a may be shorted. The electrode terminal 12a and the electrode terminal 12b may be conductively connected via the first housing 11. As a result, the positive terminal 22a and the electrode terminal 12a may be conductively connected.

A user may vibrate the external device such that the first housing 11 and the second housing 21 may vibrate in the longitudinal direction. The kinetic energy may be applied to the first housing 11. The kinetic energy may be transferred to the permanent magnet 16 via the buffer members 17a, 17b to the permanent magnet 16. The permanent magnet 16 may be moved reciprocally in the longitudinal direction inside the tubular shaped member 14. The permanent magnet 16 may be moved in and out of a space covered by the coil 15. When the permanent magnet 16 passes through the space inside the coil 15, lines of magnetic flux generated by the permanent magnet 16 orthogonally intersect with the coil 15. As a result of this, an induced electric current may be generated in the coil 15. By the permanent magnet 16 repeatedly entering and leaving the space inside the coil 15, an alternating current is generated in the coil 15. A length of possible movement of the permanent magnet 16 is substantially the same as the length, in the longitudinal direction, of the tubular shaped member 14. The length of the tubular shaped member 14 in the longitudinal direction is substantially the same as the length of the first housing 11 in the longitudinal direction. Thus, the permanent magnet 16 may be moved while utilizing an internal area of the first housing 11 to a maximum extent. As a stroke of the permanent magnet 16 is larger, the alternating current arising in the coil 15 is larger.

The alternating current arising in the coil 15 is transferred to the rectifier portion 23 via the external wiring 18. The rectifier portion 23 performs full-wave rectification on the alternating current to convert the alternating current to a direct current. The direct current is stored in the electricity storage portion 24.

A connection terminal 26 that is connected to a load 28 of the external device may be connected between the electrode terminal 12a and the negative terminal 22b. The electric current stored in the electricity storage portion 24 may be output from and input to the positive terminal 22a and the negative terminal 22b. The positive terminal 22a may be conductively connected to the electrode terminal 12b via the connection terminal 27. The electrode terminal 12b and the electrode terminal 12a may be conductively connected via the first housing 11. Thus, the electric current that is output from the positive terminal 22a and the negative terminal 22b may be supplied from the electrode terminal 12a and the negative terminal 22b to the load 28. The external device may be driven by the supplied electric current.

As explained above, in the vibration-based power generator 1, the rectifier portion 23 and the electricity storage portion 24 are housed in the second housing 21. The rectifier portion 23 and the electricity storage portion 24 do not occupy the area inside the first housing 11, and thus the area inside the first housing 11 that can be utilized becomes larger. The permanent magnet 16 can be moved reciprocally while utilizing the area inside the first housing 11 to the maximum extent. In this way, the stroke of the permanent magnet 16 can be made larger. Thus, the induced electric current that is generated in the coil 15 can be made larger. Large electric current can be stored in the electricity storage portion 24. In this way, the vibration-based power generator 1 can increase an amount of the electric current that can be stored as a result of the reciprocating motion, and can enhance power generation efficiency. Further, the area to house the electricity storage portion 24 can be made larger, and the large capacity electricity storage portion 24 can be used.

Also, in a general electronic device, such as a remote controller that is driven by a dry battery, a plurality of dry batteries may be stored alongside each other and used, as shown in FIG. 1, such that each of the positive terminals and each of the negative terminals may be placed facing toward opposite sides. The adjacent positive terminal and negative terminal may be conductively connected in a state of being connected in series, and electric current is taken from the plurality of batteries. Here, the electrode terminal 12a and the electrode terminal 12b of the first housing 11 may be conductively connected via the first housing 11. Thus, the electric current can be taken from the electrode terminal 12a and the negative terminal 22b by shorting the positive terminal 22a and the electrode terminal 12b on the side of the external device. As a result, the vibration-based power generator 1 can be easily adopted in the above-described general electronic device.

In the above description, a case is exemplified in which the positive terminal 22a and the electrode terminal 12b are shorted by the connection terminal 27, but the present invention is not limited to this. The electrode terminal 12a and the negative terminal 22b may be connected by the connection terminal 27. In this case, the electric current may be output from the positive terminal 22a and the electrode terminal 12b and input to the outside.

In the above description, the electric current stored in the electricity storage portion 24 may be supplied to the load 28 that is connected to the vibration-based power generator 1, but the present invention is not limited to this. The direct current output from the direct current terminal portion of the rectifier portion 23 may be supplied directly to the load 28.

In the above description, the single power generation unit 13 is housed in the first housing 11, but the present invention is not limited to this. Two or more power generation units may be housed in the first housing 11.

### Second embodiment

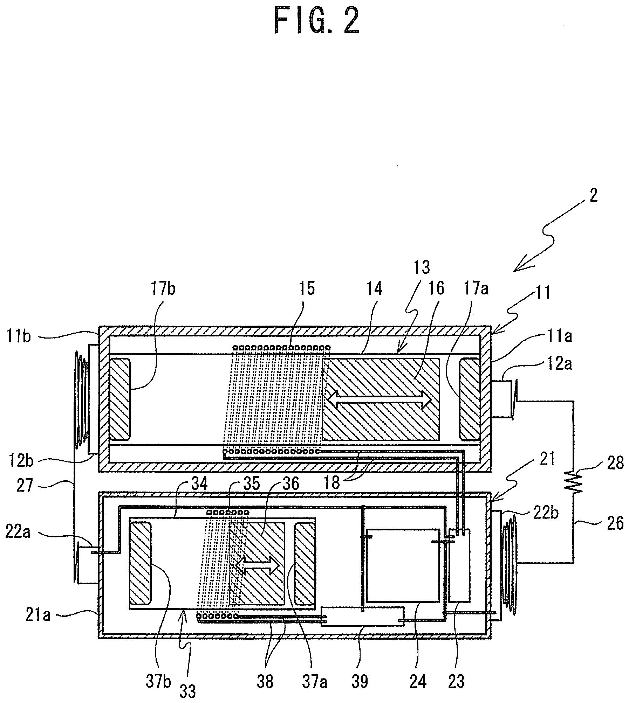

The vibration-based power generator 2 according to a second embodiment of the present invention will be explained with reference to FIG. 2. In the following explanation, only points that are different to those of the above-described first embodiment will be explained, the same reference numerals will be assigned to the same portions and an explanation thereof will be omitted.

A power generation unit 33 and a rectifier portion 39 are additionally housed inside the second housing 21. Of the area inside the second housing 21, the power generation unit 33 and the rectifier portion 39 are housed in an area excluding the rectifier portion 23 and the electricity storage portion 24. The power generation unit 33 is an example of a second power generation unit of the present invention.

The power generation unit 33 includes a tubular shaped member 34, a coil 35, and a permanent magnet 36. A length of the tubular shaped member 34 in the longitudinal direction is substantially half the length of the second housing 21 in the longitudinal direction. The coil 35 is wound around an outer surface of the tubular shaped member 34. Both ends of the coil 35 are connected to wiring 38. The permanent magnet 36 is provided such that the permanent magnet 36 can move freely in the longitudinal direction inside the tubular shaped member 34. Buffer members 37a, 37b are provided on inner sides of wall portions at both ends of the tubular shaped member 34. The buffer member 37a is provided on the inner side of the wall portion on the right side. The buffer member 37b is provided on the inner side of the wall portion on the left side. An input portion of the rectifier portion 39 is connected to the wiring 38. A direct current terminal portion of the rectifier portion 39 is connected to the electricity storage portion 24 via wiring. The electricity storage portion 24 can store electric current rectified by the rectifier portion 39. The electricity storage portion 24 and the direct current terminal portions of the rectifier portions 23, 39 are connected to the positive terminal 22a and the negative terminal 22b via wiring. The rectifier portion 39 can output the rectified electric current directly to the outside via the positive terminal 22a and the negative terminal 22b.

Operations of the vibration-based power generator 2 will be explained. The vibration-based power generator 2 may be attached to an external device. A user may vibrate the external device such that the first housing 11 and the second housing 21 may vibrate in the longitudinal direction. The kinetic energy may be applied to the first housing 11 and to the second housing 21. The kinetic energy may be transferred to the permanent magnets 16, 36. The permanent magnet 16 may be moved reciprocally in the longitudinal direction inside the tubular shaped member 14. The permanent magnet 36 may be moved reciprocally in the longitudinal direction inside the tubular shaped member 34. An alternating current may be generated in the coils 15, 35. By vibrating the vibration-based power generator 2, the permanent magnets 16, 36 can be caused to vibrate simultaneously, and thus the vibration-based power generator 2 can simultaneously cause larger alternating current to be generated. The alternating current arising in the coil 15 may be transferred to the rectifier portion 23 via the external wiring 18. The alternating current arising in the coil 35 may be transferred to the rectifier portion 39 via the wiring 38. Full-wave rectification may be performed on the alternating current by the rectifier portions 23, 39 and the alternating current may thus be converted to direct current. The direct current may be stored in the electricity storage portion 24. The electric current that is stored in the electricity storage portion 24 may be output from the electrode terminal 12a and the negative terminal 22b and input to the outside. The electric current may be supplied to the load 28. The external device may be driven by the supplied electric current.

As explained above, the vibration-based power generator 2 can generate the alternating current simultaneously in the coil 15 housed in the first housing 11 and the coil 35 housed in the second housing 21. The vibration-based power generator 2 can efficiently store more electric current in the electricity storage portion 24. The vibration-based power generator 2 can further increase an amount of the electric current that can be stored as a result of the reciprocating motion, and can enhance power generation efficiency.

In the above description, the single power generation unit 33 is housed in the second housing 21, but the present invention is not limited to this. Two or more power generation units may be housed in the second housing 21.

### Third embodiment

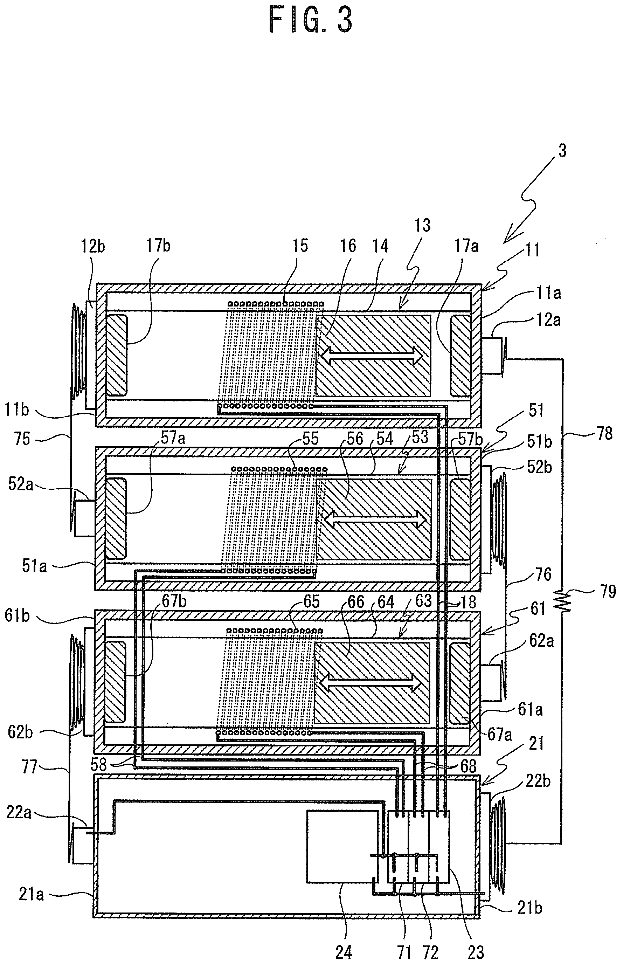

The vibration-based power generator 3 according to a third embodiment of the present invention will be explained with reference to FIG. 3. In the following explanation, only points that are different to those of the above-described first embodiment will be explained, the same reference numerals will be assigned to the same portions and an explanation thereof will be omitted.

In addition to the first embodiment, the vibration-based power generator 3 further includes a third housing 51 and a fourth housing 61. A shape of the third housing 51 and the fourth housing 61 is the same as that of the first housing 11. The first housing 11, the third housing 51, the fourth housing 61, and the second housing 21 are arranged alongside each other, from the top of the sheet, in the following order: the first housing 11, the third housing 51, the fourth housing 61, and the second housing 21. Electrode terminals are provided on both wall portions of substantially a cylindrical shape of the third housing 51. An electrode terminal 52a is provided on a first wall portion 51a, which is the left-side wall portion. An electrode terminal 52b is provided on a second wall portion 51b, which is the right-side wall portion. The third housing 51 has conductive properties. The electrode terminal 52a and the electrode terminal 52b are each connected to the third housing 51. The electrode terminal 52a and the electrode terminal 52b are conductively connected. Electrode terminals are provided on both wall portions of substantially a cylindrical shape of the fourth housing 61. An electrode terminal 62a is provided on a first wall portion 61a, which is the right-side wall portion. An electrode terminal 62b is provided on a second wall portion 61b, which is the left-side wall portion. The fourth housing 61 has conductive properties. The electrode terminal 62a and the electrode terminal 62b are each connected to the fourth housing 61. The electrode terminal 62a and the electrode terminal 62b are conductively connected.

The third housing 51 houses a power generation unit 53. The power generation unit 53 includes a tubular shaped member 54, a coil 55, and a permanent magnet 56. Buffer members 57a, 57b are provided on inner sides of wall portions at both ends of the tubular shaped member 54. Both ends of the coil 55 are connected to external wiring 58. The fourth housing 61 houses a power generation unit 63. The power generation unit 63 includes a tubular shaped member 64, a coil 65, and a permanent magnet 66. Buffer members 67a, 67b are provided on inner sides of wall portions at both ends of the tubular shaped member 64. Both ends of the coil 65 are connected to external wiring 68. A structure of the power generation units 53, 63 is the same as that of the power generation unit 13 housed in the first housing 11.

Rectifier portions 71, 72 are additionally housed in the second housing 21. The external wiring 58 that extends from both the ends of the coil 55 is connected to an input portion of the rectifier portion 71. The external wiring 68 that extends from both the ends of the coil 65 is connected to an input portion of the rectifier portion 72. Direct current terminal portions of the respective rectifier portions 71, 72 are connected to the electricity storage portion 24 via wiring. The electricity storage portion 24 can store electric current rectified by the rectifier portions 23, 71, 72. The direct current terminal portions of the rectifier portions 71, 72 are connected to the positive terminal 22a and the negative terminal 22b via wiring. The rectifier portions 71, 72 can directly output and input the rectified current to the outside via the positive terminal 22a and the negative terminal 22b.

Operations of the vibration-based power generator 3 will be explained. The vibration-based power generator 3 may be attached to an external device such that the first housing 11 to the fourth housing 61 may be arranged alongside each other. The electrode terminal 12a, the electrode terminal 52b, the electrode terminal 62a, and the negative terminal 22b may be arranged on a same side. The electrode terminal 12b, the electrode terminal 52a, the electrode terminal 62b, and the positive terminal 22a may be arranged on a same side.

A connection terminal 75 that the external device includes may be connected between the electrode terminal 12b and the electrode terminal 52a. The electrode terminal 12b and the electrode terminal 52a may be shorted. A connection terminal 76 that the external device includes may be connected between the electrode terminal 52b and the electrode terminal 62a. The electrode terminal 52b and the electrode terminal 62a may be shorted. A connection terminal 77 that the external device includes may be is connected between the electrode terminal 62b and the positive terminal 22a. The electrode terminal 62b and the positive terminal 22a may be shorted. The electrode terminal 12a and the electrode terminal 12b are conductively connected via the first housing 11. The electrode terminal 52a and the electrode terminal 52b are conductively connected via the third housing 51. The electrode terminal 62a and the electrode terminal 62b are conductively connected via the fourth housing 61. As a result, the positive terminal 22a and the electrode terminal 12a may be conductively connected.

A user may vibrate the external device such that the first housing 11 to the fourth housing 61 may vibrate in the longitudinal direction. The kinetic energy may be applied to the first housing 11 to the fourth housing 61. The kinetic energy may be transferred to the permanent magnets 16, 56, 66. The permanent magnet 16 may be moved reciprocally in the longitudinal direction inside the tubular shaped member 14. The permanent magnet 56 may be moved reciprocally in the longitudinal direction inside the tubular shaped member 54. The permanent magnet 66 may be moved reciprocally in the longitudinal direction inside the tubular shaped member 64. Alternating current may be generated in the coils 15, 55, 65. The permanent magnets 16, 56, 66 can be caused to vibrate simultaneously, and thus the vibration-based power generator 3 can simultaneously cause even larger alternating current to be generated. Further, the permanent magnets 16, 56, 66 can be moved reciprocally while utilizing an area inside each of the housings to a maximum extent, and thus a stroke of each of the permanent magnets 16, 56, 66 can be made larger. The alternating current arising in the coil 15 may be transferred to the rectifier portion 23 via the external wiring 18. The alternating current arising in the coil 55 may be transferred to the rectifier portion 71 via the external wiring 58. The alternating current arising in the coil 65 may be transferred to the rectifier portion 72 via the external wiring 68. The alternating current may be converted to direct current by the rectifier portions 23, 71, 72 and the direct current may be stored in the electricity storage portion 24.

A connection terminal 78 that is connected to a load 79 of the external device may be connected between the electrode terminal 12a and the negative terminal 22b. The electric current that is stored in the electricity storage portion 24 may be output to the outside from the positive terminal 22a and the negative terminal 22b. The positive terminal 22a and the electrode terminal 12a may be conductively connected. Thus, the electric current that is output from and input to the positive terminal 22a and the negative terminal 22b may be output from the electrode terminal 12a and the negative terminal 22b and input to the load 79. The external device may be driven by the supplied electric current.

As explained above, in addition to the power generation unit 13, the vibration-based power generator 3 can cause the alternating current to be generated by the power generation units 53, 63. The vibration-based power generator 3 can efficiently store even more electric current in the electricity storage portion 24. The vibration-based power generator 3 can even further increase an amount of the electric current that can be stored as a result of the reciprocating motion, and can enhance power generation efficiency.

The rectifier portions 71, 72, which respectively rectify the alternating current generated by the power generation units 53, 63, are housed in the second housing 21. Therefore, the large areas inside the housings 51, 61, which respectively house the power generation units 53, 63, can be secured. The permanent magnets 56, 66 can be respectively moved reciprocally while utilizing the areas inside the housings 51, 61 to the maximum extent. In this way, the stroke of the permanent magnets 56, 66 can be made larger. The vibration-based power generator 3 can realize even more favorable power generation efficiency.

In the above description, the vibration-based power generator 3 has the structure in which the three housings that house the power generation units are provided, but the present invention is not limited to this. A number of the housings that house the power generation units may be two, or may be four or more.

### Fourth embodiment

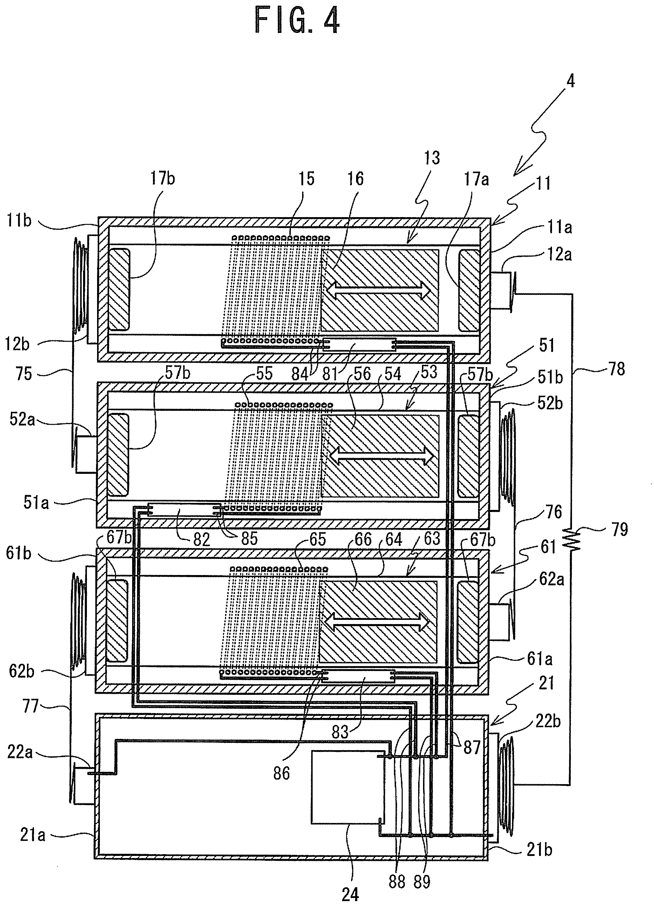

The vibration-based power generator 4 according to a fourth embodiment of the present invention will be explained with reference to FIG. 4. In the following explanation, only points that are different to those of the above-described third embodiment will be explained, the same reference numerals will be assigned to the same portions and an explanation thereof will be omitted.

In the vibration-based power generator 4, the first housing 11 further includes a rectifier portion 81. The rectifier portion 81 rectifies the alternating current generated in the coil 15 of the power generation unit 13. Both the ends of the coil 15 are connected to an input portion of the rectifier portion 81 via wiring 84. A direct current terminal portion of the rectifier portion 81 is connected to the electricity storage portion 24 housed in the second housing 21 via external wiring 87. Direct current output from the direct current terminal portion of the rectifier portion 81 may be transferred to the electricity storage portion 24 via the external wiring 87 and may be stored in the electricity storage portion 24.

The third housing 51 further includes a rectifier portion 82. The rectifier portion 82 rectifies the alternating current generated in the coil 55 of the power generation unit 53. Both the ends of the coil 55 are connected to an input portion of the rectifier portion 82 via wiring 85. A direct current terminal portion of the rectifier portion 82 is connected to the electricity storage portion 24 via external wiring 88. Direct current output from the direct current terminal portion of the rectifier portion 82 may be transferred to the electricity storage portion 24 via the external wiring 88 and may be stored in the electricity storage portion 24.

The fourth housing 61 further includes a rectifier portion 83. The rectifier portion 83 rectifies the alternating current generated in the coil 65 of the power generation unit 63. Both the ends of the coil 65 are connected to an input portion of the rectifier portion 83 via wiring 86. A direct current terminal portion of the rectifier portion 83 is connected to the electricity storage portion 24 via external wiring 89. Direct current output from the direct current terminal portion of the rectifier portion 83 may be transferred to the electricity storage portion 24 via the external wiring 89 and may be stored in the electricity storage portion 24.

The direct current terminal portions of the rectifier portions 81, 82, 83 and the electricity storage portion 24 are connected to the positive terminal 22a and the negative terminal 22b via wiring. The rectifier portions 81, 82, 83 can directly output and input the rectified direct current to the outside via the positive terminal 22a and the negative terminal 22b.

As explained above, in the vibration-based power generator 4, the rectifier portions (the rectifier portions 81, 82, 83) corresponding to the respective power generation units are respectively housed in the housings (the first housing 11, the third housing 51, the fourth housing 61) in which the respective power generation units are housed. As the alternating current can be output for each of the housings, a housing can easily be additionally installed. In this way, a power generation amount of the vibration-based power generator 4 can easily be increased.

In the above description, the vibration-based power generator 4 has a structure in which a rectifier portion is not housed inside the second housing 21, but the present invention is not limited to this. A rectifier portion corresponding to each of power generation units may also be housed in the second housing 21. In this way, in a case where the rectifier portion is not housed inside the additionally installed housing, the rectifier portion housed in the second housing 21 can be used to rectify the alternating current. In the vibration-based power generator 4, both the housing that houses the rectifier portion and the housing that does not house the rectifier portion can be additionally installed.

### Fifth embodiment

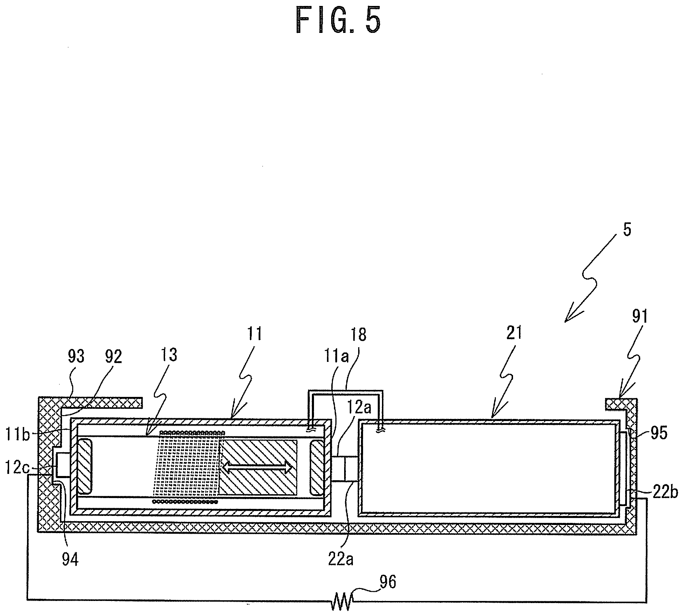

The vibration-based power generator 5 according to a fifth embodiment of the present invention will be explained with reference to FIG. 5. In the following explanation, only points that are different to those of the above-described first embodiment will be explained, the same reference numerals will be assigned to the same portions and an explanation thereof will be omitted.

In FIG. 5, the first housing 11 and the second housing 21 of the vibration-based power generator 5 are arranged in a single line in the left-right direction such that their longitudinal direction is in the left-right direction. The first housing 11 is arranged on the left side. The second housing 21 is arranged on the right side. In place of the electrode terminal 12b, an electrode terminal 12c is provided on the second wall portion 11b of the first housing 11. The electrode terminal 12c and the electrode terminal 12a have a same shape as that of the positive terminal 22a. The positive terminal 22a of the second housing 21 and the electrode terminal 12a of the first housing 11 may be in contact with each other.

The vibration-based power generator 5 may be housed inside a battery storage portion 91 of the external device. The battery storage portion 91 includes a container portion 92, of which an upper portion is open. The vibration-based power generator 5 may be housed inside the container portion 92. In a state in which the vibration-based power generator 5 is housed inside the container portion 92, the electrode terminal 12c of the first housing 11 may be fitted into a recessed portion 94, which is provided on an inner side of a left wall of the battery storage portion 91. The negative terminal 22b of the second housing 21 may be fitted into a recessed portion 95, which is provided on an inner side of a right wall of the battery storage portion 91. A load 96 of the external device may be connected between the recessed portion 94 and the recessed portion 95.

The battery storage portion 91 includes an extension portion 93, which horizontally extends to the right from a top edge portion of the left wall portion. The extension portion 93 is provided in order to inhibit the vibration-based power generator 5 from being removed from the container portion 92. The external wiring 18 is connected between an upper right portion of the first housing 11 and an upper left portion of the second housing 21. The external wiring 18 protrudes from each of the housings at a substantially central portion, in the left-right direction, of the container portion 92.

The electric current stored in the electricity storage portion 24 of the second housing 21 shown in FIG. 1 may be output from and input to the positive terminal 22a and the negative terminal 22b. The positive terminal 22a and the electrode terminal 12a may be in contact with each other. The electrode terminal 12a and the electrode terminal 12c are conductively connected via the first housing 11. Thus, the electric current output from the positive terminal 22a and the negative terminal 22b may be supplied to the load 96 from the electrode terminal 12a and the negative terminal 22b. The external device may be driven by the supplied electric current.

A case is assumed in which the first housing 11 is housed with a reversed left-right orientation. In this case, a portion of the first housing 11 that connects to the external wiring 18 is covered by the extension portion 93 and it is not possible to pull the external wiring 18 to the outside. As a result, the vibration-based power generator 5 cannot be housed in the battery storage portion 91. In response to this, the vibration-based power generator 5 includes the electrode terminals 12a, 12c, which each have the same shape as the positive terminal 22a, and thus the first housing 11 can be housed while switching the left-right orientation. Even in a case in which the first housing 11 is housed while switching the left-right orientation, the electrode terminal 12c can be reliably fitted into the recessed portion 94.

As explained above, in the vibration-based power generator 5, the electrode terminal 12a and the electrode terminal 12c each have the same shape as the positive terminal 22a. Thus, in a case in which the positive terminal 22a of the second housing 21 and the electrode terminal of the first housing 11 are in contact and the first housing 11 and the second housing 21 are connected in series and used, even if the orientation of the first housing 11 is switched, the electrode terminal can be reliably fitted into the recessed portion 94 of the battery storage portion 91. Thus, for example, in a case where a portion of the first housing 11 from which the external wiring 18 is pulled out is covered by the extension portion 93, it is possible to switch the orientation of the first housing 11. The vibration-based power generator 5 can therefore be reliably inserted into the battery storage portion 91 and used, without depending on a shape of the battery storage portion 91.

### Sixth embodiment

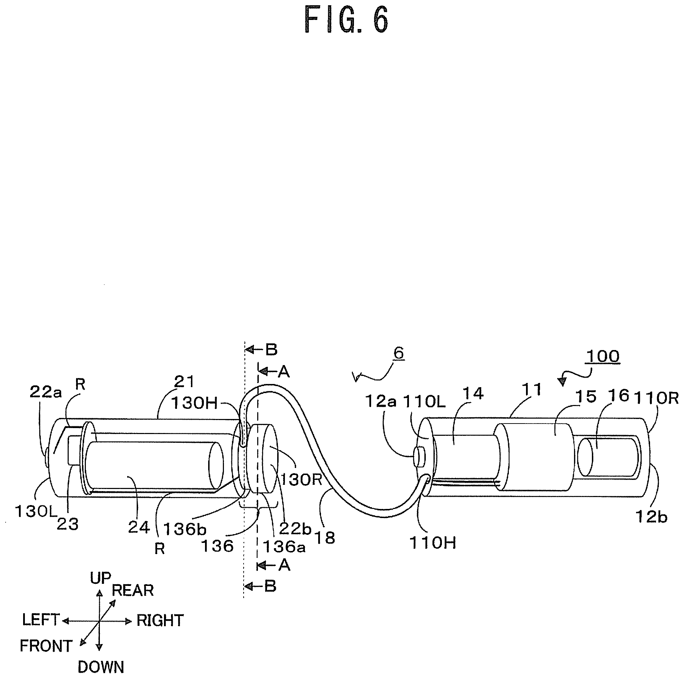

The vibration-based power generator 6 according to a sixth embodiment of the present invention will be explained with reference to FIG. 6 to FIG. 10. A structure of the vibration-based power generator 6 will be explained by using the left-right direction, the front-rear direction, and the up-down direction shown in these figures. In the following explanation, only points that are different to those of the above-described first embodiment will be explained, the same reference numerals will be assigned to the same portions and an explanation thereof will be omitted. The vibration-based power generator 6 described in the sixth embodiment includes a storage portion 136, in which the external wiring 18 is placed. The storage portion 136 may be provided on any one of the vibration-based power generators 1 to 5.

FIG. 6 is a perspective view showing a whole of the vibration-based power generator 6 according to the sixth embodiment. The vibration-based power generator 6 includes the first housing 11 and the second housing 21. The electric power generated by a power generation unit 100 inside the first housing 11 is supplied by the external wiring 18 to the rectifier portion 23 inside the second housing 21. In FIG. 6, the first housing 11 and the second housing 21 are arranged with their longitudinal direction in the left-right direction. Both the first housing 11 and the second housing 21 each have the same shape and the same dimensions as those of the standardized AA size battery as a dry battery.

Further, the electrode terminal 12b is provided on a right end 110R and the electrode terminal 12a is provided on a left end 110L of the first housing 11. The electrode terminal 12b is a terminal having a planar shape that is standardized for a negative terminal of a battery. The electrode terminal 12a is a terminal having a convex shape that is standardized for a positive terminal of a battery. A draw hole 110H is provided in the left end 110L of the first housing 11.

The negative terminal 22b is provided on a right end 130R and the positive terminal 22a is provided on a left end 130L of the second housing 21. The negative terminal 22b is a terminal having a planar shape that is standardized for a negative terminal of a battery. The positive terminal 22a is a terminal having a convex shape that is standardized for a positive terminal of a battery. The negative terminal 22b and the positive terminal 22a are formed of a conductive metal material. Inside the second housing 21, the electricity storage portion 24 is electrically connected to the negative terminal 22b by a lead wire R. Further, the electricity storage portion 24 is electrically connected to the positive terminal 22a by the lead wire R. The storage portion 136, which will be described below, is provided on an outer periphery of the second housing 21, and a draw hole 130H is formed in a part of the storage portion 136.

As shown in FIG. 6, one end of the external wiring 18 is connected to the coil 15 in the first housing 11 and another end of the external wiring 18 is connected to the input portion of the rectifier portion 23 inside the second housing 21. The end portions of the external wiring 18 are respectively pulled out from the draw holes 110H and 130H. The external wiring 18 has a length that can be used in accordance with various usages of the vibration-based power generator 6 and in accordance with various arrangements of the power generation unit 100 and the rectifier portion inside the second housing 21. The length of the external wiring 18 is, for example, a length that is longer than the length in the left-right direction of the first housing 11 and the second housing 21. Further, in the vibration-based power generator 6 according to the sixth embodiment, the external wiring 18 is connected such that the electrode terminal 12a side of the first housing 11 and the negative terminal 22b side of the second housing 21 face each other.

The storage portion 136 is formed on an outer peripheral surface of the second housing 21, in an area from the right end 130R side to approximately one tenth of a whole of the second housing 21 in the left-right direction. The storage portion 136 includes a storage end portion 136a, which is formed on the right end 130R, and a recessed portion 136b, which is formed in an area adjacent to the storage end portion 136a. The recessed portion 136b is a groove that is formed along a full circuit of the outer peripheral surface of the second housing 21. A depth of the groove is larger than a diameter of the external wiring 18. The external wiring 18 can be wired on a side surface of the storage end portion 136a, and the recessed portion 136b is structured such that the external wiring 18 can be wound around the recessed portion 136b.

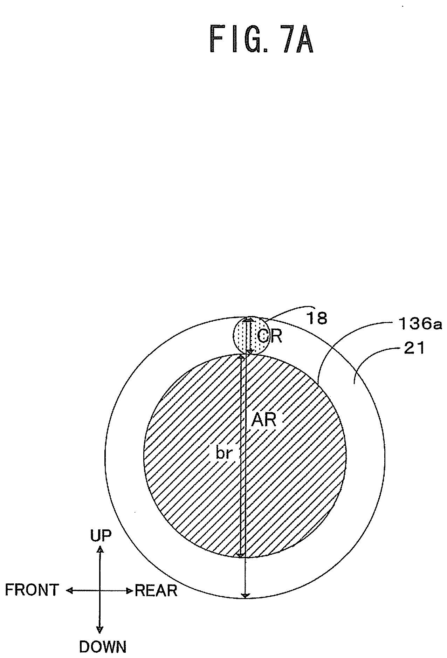

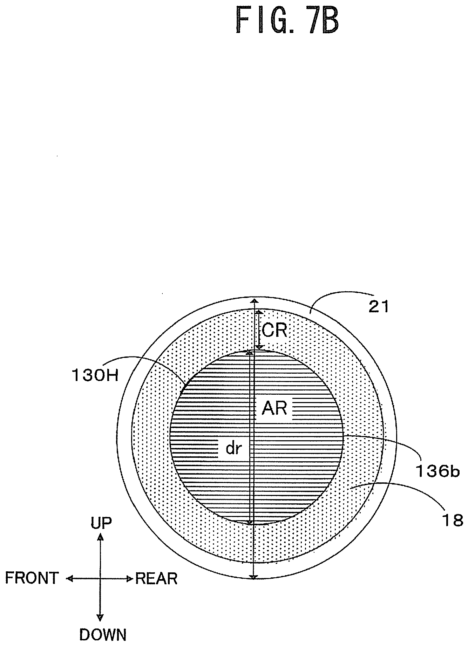

The storage end portion 136a will be explained in detail using FIG. 7A. The recessed portion 136b will be explained in detail using FIG. 7B. FIG. 7A is a diagram showing a cross section, taken along a line A-A shown in FIG. 6, of the storage end portion 136a of the second housing 21 and of the external wiring 18 wired on the side surface of the storage end portion 136a. In FIG. 7A, dimensional relationships among an outer diameter AR of the second housing 21, an outer diameter br of the storage end portion 136a, and a diameter CR of the external wiring 18 when the external wiring 18 is wired on the side surface of the storage end portion 136a are indicated using arrows. The outer diameter br of the storage end portion 136a is formed to be smaller than a difference between the outer diameter AR of the second housing 21 and the diameter CR of the external wiring 18. Accordingly, in a case where the external wiring 18 that is pulled out of the draw hole 130H is wired to the side surface of the storage end portion 136a, the external wiring 18 can be reliably wired such that the external wiring 18 is not placed beyond the outer diameter of the second housing 21.

FIG. 7B is a diagram showing a cross section, taken along a line B-B shown in FIG. 6, of the recessed portion 136b of the second housing 21, and showing a state in which the external wiring 18 is wound along a circumference of the recessed portion 136b. In FIG. 7B, dimensional relationships among the outer diameter AR of the second housing 21, an outer diameter dr of the recessed portion 136b, and the diameter CR of the external wiring 18 when the external wiring 18 is wound along the recessed portion 136b are indicated using arrows. The recessed portion 136b is formed such that the outer diameter dr of the recessed portion 136b is smaller than a difference between the outer diameter AR of the second housing 21 and two times the diameter CR of the external wiring 18. Accordingly, in a case where the external wiring 18 is wound along the circumference of the recessed portion 136b, the external wiring 18 may not be placed beyond the outer diameter of the second housing 21. The storage portion 136 of the present embodiment is an example of a storage portion of the present invention.

### [Example of use]

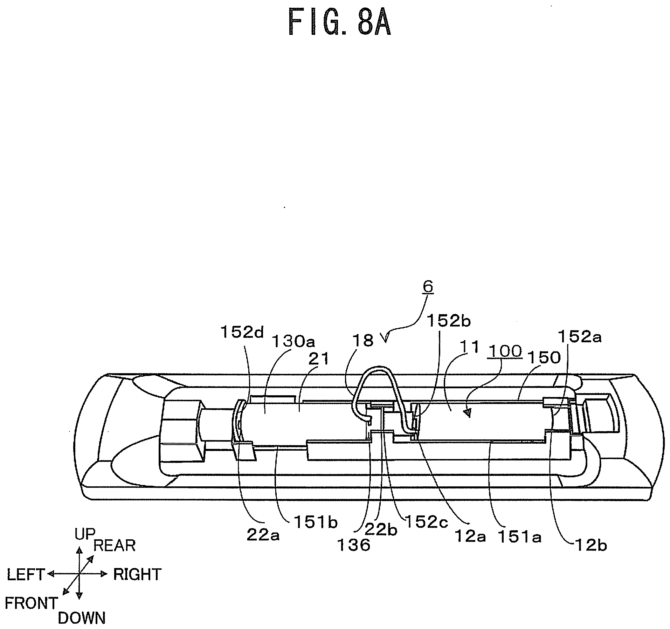

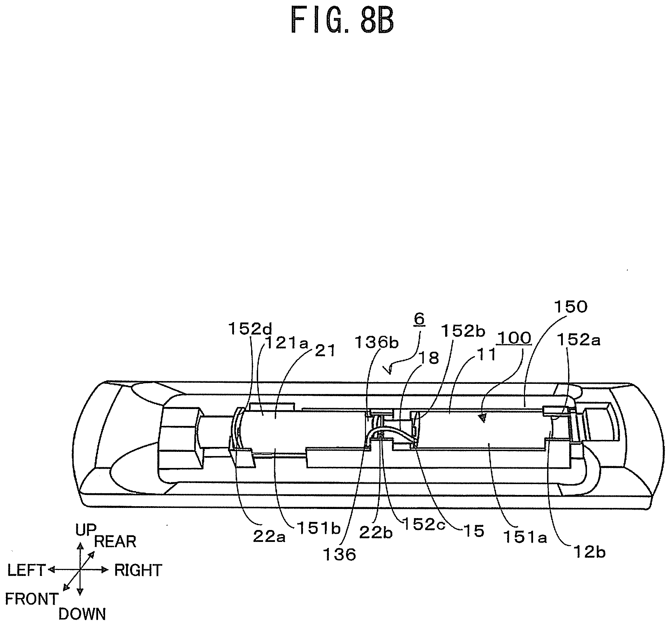

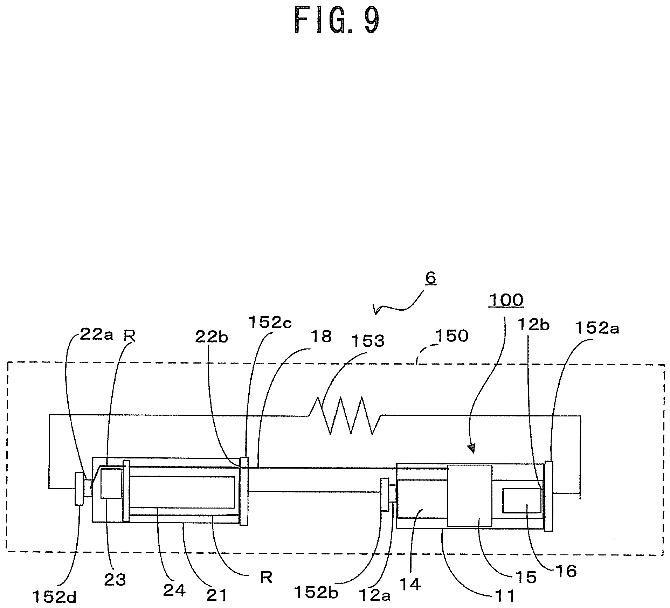

Next, an example of use of the vibration-based power generator 6 will be explained using FIG. 8A, FIG. 8B, and FIG. 9. The vibration-based power generator 6 may be used in a remote control, such as that shown in FIG. 8A and FIG. 8B, that can remotely operate an electric appliance, and the like. The remote control includes a specified battery box 150. The battery box 150 includes storage areas 151a and 151b, which can house two AA size batteries. The two AA size batteries may be housed in the storage areas 151a and 151b of the battery box 150. In this storage state, the two AA size batteries may be connected in series. In the sixth embodiment, the first housing 11 and the second housing 21 of the vibration-based power generator 6 may be housed in the storage areas 151a and 151b and used. FIG. 8A and FIG. 8B are perspective views showing arrangements of the vibration-based power generator 6 that is housed in the battery box 150. FIG. 9 is a schematic diagram showing electrical wiring of the vibration-based power generator 6 and the battery box 150.

The arrangement of the vibration-based power generator 6 that is housed inside the battery box 150 will be explained using the left-right direction, the front-rear direction, and the up-down direction shown in FIG. 8A. As shown in FIG. 8A, the battery box 150 includes the storage area 151a on the right side and the storage area 151b on the left side. Connection terminals 152a and 152b are provided on both ends of the storage area 151a, and connection terminals 152c and 152d are provided on both ends of the storage area 151b. In order to connect the two AA size batteries in series, in the battery box 150, the connection terminals 152d and 152a, and the connection terminals 152b and 152c are respectively electrically connected using lead wires, as shown in FIG. 9. In addition, an external load 153 is provided between the connection terminals 152d and 152a.

In the sixth embodiment, the first housing 11 may be arranged in the storage area 151a of the battery box 150, and the second housing 21 may be arranged in the storage area 151b. At that time, the electrode terminal 12b of the first housing 11 may be in contact with the connection terminal 152a on the right side of the storage area 151a, and the electrode terminal 12a of the first housing 11 may be in contact with the connection terminal 152b on the left side. The negative terminal 22b of the second housing 21 may be in contact with the connection terminal 152c on the right side of the storage area 151b and the positive terminal 22a of the second housing 21 may be in contact with the connection terminal 152d on the left side. The first housing 11 and the second housing 21 may be sandwiched from both sides in the left-right direction of the storage area 151a and the storage area 151b and fixed by the connection terminal 152a and the connection terminal 152b and by the connection terminal 152c and the connection terminal 152d.

FIG. 9 is a wiring diagram of the vibration-based power generator 6 that is arranged in the battery box 150. The electric power stored in the electricity storage portion 24 of the second housing 21 may be output through the lead wire R to the negative terminal 22b and the positive terminal 22a. As a result, the electric current output from the positive terminal 22a may pass in order through the connection terminal 152d, the external load 153, the connection terminal 152a, the electrode terminal 12b, the first housing 11, the electrode terminal 12a, the connection terminal 152b and the connection terminal 152c, and may be input into the negative terminal 22b. As shown in FIG. 9, the negative terminal 22b is connected via the lead wire R to the electricity storage portion 24.

In a case where the first housing 11 and the second housing 21 are arranged in the storage areas 151a and 151b of the battery box 150, the external wiring 18 may be not housed in the battery box 150, but may be positioned above the battery box 150, as shown in FIG. 8A. However, in a case where the vibration-based power generator 6 is used, a not-shown lid etc. that can protect the first housing 11 and the second housing 21 from outside may be placed on the battery box 150. For that reason, it is necessary to house the external wiring 18 such that the external wiring 18 may not be in contact with the lid that is placed for the first housing 11 and the second housing 21.

Here, the vibration-based power generator 6 of the sixth embodiment includes the storage portion 136 that is formed on the outer periphery of the second housing 21. The external wiring 18 has a structure such that the external wiring 18 can be wound along the recessed portion 136b of the storage portion 136 and housed inside the battery box 150. When the vibration-based power generator 6 is arranged in the battery box 150, most of the external wiring 18 that connects to the power generation unit 100 and to the input portion of the rectifier portion 23 may be positioned above the battery box 150, as shown in FIG. 8A. Here, the user may perform a housing operation in order to house the external wiring 18 inside a space of the battery box 150. The housing operation is, specifically, an operation in which the second housing 21 that includes the storage portion 136 is rotated in the front-rear direction.

The user may move the second housing 21 that is fixed by the connection terminal 152c and the connection terminal 152d such that a side surface 121a is rotated. The second housing 21 may be in a state in which the negative terminal 22b and the positive terminal 22a are supporting points, and the second housing 21 may be rotated such that a straight line passing through the negative terminal 22b and the positive terminal 22a is a rotation axis. At this time, in a case where the second housing 21 is rotated, a position of the draw hole 130H may also be rotated. One end of the external wiring 18 is fixed to the rectifier portion 23, and is guided through from the draw hole 130H. Thus, in accordance with the rotation of the second housing 21, the external wiring 18 between the draw hole 130 H and the other end of the external wiring 18 that is connected to the power generation unit 100 may be wound up along the recessed portion 136b of the second housing 21. In addition, the length of the external wiring 18 that is positioned above the battery box 150 may be gradually shortened in accordance with the rotation of the second housing 21, and the external wiring 18 may be wound onto the perimeter of the recessed portion 136b such that a length corresponding to a distance between the draw hole 110H and the draw hole 130H is left. In a case where the housing operation is performed in this manner, of the length of the external wiring 18 that is positioned above the battery box 150 when the vibration-based power generator 6 is arranged in the battery box 150, a surplus length of the external wiring 18, apart from the length corresponding to the distance between the draw hole 110H and the draw hole 130H, may be taken up by the recessed portion 136b of the second housing 21 and housed.

The vibration-based power generator 6 of the sixth embodiment includes the first housing 11 and the second housing 21, which each have the standardized shape of the AA size battery. The storage portion 136 is formed on the outer periphery of this second housing 21. The external wiring 18 of the vibration-based power generator 6 has a sufficient length such that an arrangement relationship between the first housing 11 and the second housing 21 can be varied. Therefore, in a case where the vibration-based power generator 6 is housed in the battery box 150 etc. and used, the use of the vibration-based power generator 6 is not limited by the length of the external wiring 18. Specifically, the first housing 11 and the second housing 21 can be arranged in accordance with a shape and a usage of the battery box 150. Further, after the vibration-based power generator 6 has been arranged in the battery box 150, the external wiring 18 may be wound onto the storage portion 136 and housed. Therefore, the external wiring 18 can be wired while being inhibited from placing beyond the outer periphery of the first housing 11 and the second housing 21. Further, the diameter br of the storage end portion 136a is smaller than the diameter AR of the outer periphery of the second housing 21. With this structure, the external wiring 18 can be wired to the side surface of the storage end portion 136a without having any influence on the lid etc. arranged on the battery box 150, and the first housing 11 and the second housing 21 can be fixed.

### Modified examples

The vibration-based power generator 6 of the sixth embodiment has the structure described above, but is not limited to this. It is sufficient that the shape of the first housing 11 and the second housing 21 of the sixth embodiment be a cylindrical shape in which the permanent magnet 16 can be moved reciprocally in the longitudinal direction. More specifically, it is sufficient that the shape of the first housing 11 and the second housing 21 be a standardized shape for a battery, namely, a D size battery, a C size battery, an AA size battery, or the like, and may be a member having a shape other than the cylindrical shape, such as a square column shape or a polygonal column shape, for example. In addition, in the present embodiment, the tubular shaped member 14 housed in the first housing 11 is cylindrically shaped, but is not limited to this. For example, it is sufficient that the shape of the tubular shaped member 14 be a column shape around which the coil 15 can be wound, and may be a polygonal column shape. Furthermore, it is sufficient that the coil 15 is configured to be wound around a part of or all of the tubular shaped member 14. Further, in the present embodiment, the permanent magnet 16 has a columnar shape, but is not limited to this shape, and may be, for example, a polygonal column shape or a cylindrical shape. It is preferable for the first housing 11 and the permanent magnet 16 to have a tubular shape and also to have the same shape.

In addition, in the vibration-based power generator 6 of the sixth embodiment, the external wiring 18 is connected to the power generation unit 100 and to the input portion of the rectifier portion 23 inside the second housing 21, and the wiring is appropriate to the format in which the first housing 11 and the second housing 21 are connected in series by the battery box 150. However, the external wiring 18 need not necessarily be wiring appropriate to the format in which the left end 110L of the first housing 11 is connected to the right end 130R of the second housing 21. In other words, the external wiring 18 may be wiring appropriate to a format in which a right end 110R of the first housing 11 is connected to the right end 130R of the second housing 21, or a format in which the left end 110L of the first housing 11 is connected to the left end 130L of the second housing 21. Further, it is sufficient that the one end face having a convex shape and the other end face having a planar shape are mutually connected, and the left end 110L of the first housing 11 and the right end 130R of the second housing 21 may be connected by the external wiring 18.

In addition, in the sixth embodiment, the electricity storage portion 24 that stores electric power is provided inside the second housing 21. It is sufficient that a positive terminal 22a and a negative terminal 22b are provided on at least the second housing 21. In other words, it is sufficient that the first housing 11 has a conductive structure and is sandwiched from both the left and the right sides of the storage area 151a or 151b. Specifically, both the ends of the first housing 11 may be not separated into a positive electrode and a negative electrode, and both the electrode terminals may have a convex shape that is standardized for the positive terminal of the dry battery, or both the electrode terminals may have a planar shape that is standardized for the negative terminal of the dry battery.

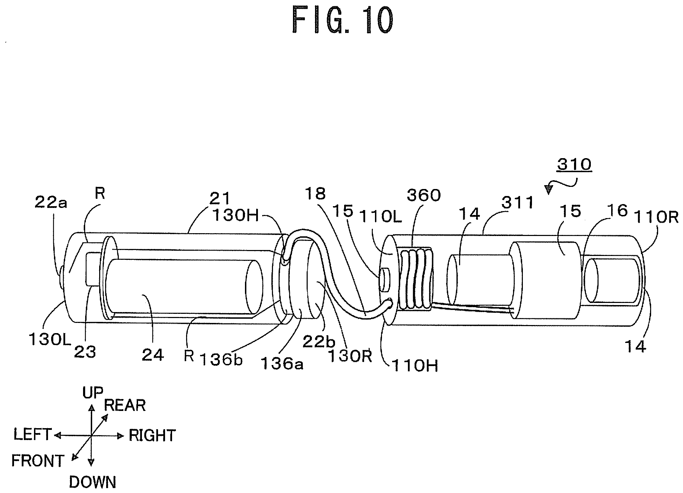

Further, in the sixth embodiment, the storage portion 136 has a structure in which the recessed portion 136b is provided along the outer periphery of the second housing 21, but it is not limited to this. For example, it may be provided along the outer periphery of the first housing 11. Alternatively, instead of a structure of being provided on the outer periphery of the first housing 11 or the second housing 21, a storage area that is able to store the external wiring 18 may be provided in the interior of the housing of either the first housing 11 or the second housing 21 where a hollow space is formed on the inner side. In FIG. 10, as an example in which a storage portion is provided in an internal portion of either one of the housings, a structural diagram is shown where a storage portion 360 is provided in an area of part of an internal portion of a first housing 311. In a power generation unit 310, the external wiring 18 is stored in this storage portion 360. In a case where the storage portion 360 is provided in the second housing 21, a movable area of the permanent magnet 16 can be sufficiently secured, in comparison to a case in which the storage portion 360 is provided in the first housing 11. In this way, power generation can be performed with high power generation efficiency.

In addition, as in the sixth embodiment, even in a case in which the storage portion 136 is provided on the outer periphery of the second housing 21, a structure in which the external wiring 18 is wound and stored is not essential. For example, as an alternative to the structure in which the groove is provided along the outer periphery of the second housing 21 as in the sixth embodiment, a groove, into which the external wiring 18 can be embedded, may be formed in an outer peripheral surface of either one of the housings and the external wiring 18 may be stored in the groove. Further, in the sixth embodiment, the storage portion 136 is provided in the second housing 21 from an end portion to a predetermined area, but is not limited to this. A storage portion that can store the external wiring 18 may be provided in a central portion, in the longitudinal direction, of the housing, or over a whole area of the housing.

The external wiring 18 shown in FIG. 1, the external wiring 58, 68 shown in FIG. 3, and the wiring 84, 85, 86 shown in FIG. 4 correspond to a "supply path" of the present invention. The first housing 11 shown in FIG. 1, and the third housing 51 and the fourth housing 61 shown in FIG. 3 and FIG. 4 correspond to a "first housing" of the present invention.

The present invention is not limited to the above-described embodiments and modified examples, and various modifications are possible. As a material of the first housing 11, the third housing 51, and the fourth housing 61, a material may be used that is, for example, conductive and magnetic. In a case where a non-magnetic material is used for the housing, lines of magnetic flux generated by the permanent magnet may pass through the housing and may be radiated to the outside. Thus, an interval between the lines of magnetic flux may become wider. In contrast to this, in a case where a magnetic material is used for the housing, the lines of magnetic flux generated by the permanent magnet may be absorbed by the housing. Thus, the interval between the lines of magnetic flux may become narrower. It is possible to increase the magnetic flux density inside the housing of the lines of magnetic flux generated by the permanent magnet. The electric current that is generated in the coil by the movement of the permanent magnet is proportional to the magnetic flux density of the lines of magnetic flux intersecting the coil. Thus, by using a magnetic material for the housing, it is possible to further increase the induced electric current generated in the coil. The power generation efficiency of the vibration-based power generator can be further improved.

### Description of the Reference Numerals

1, 2, 3, 4, 5, 6 vibration-based power generator
11 first housing
12a, 12b, 12c, 52a, 52b, 62a, 62b electrode terminal
13, 33, 53, 63, 100 power generation unit
14, 34, 54, 64 tubular shaped member
15, 35, 55, 65 coil
16, 36, 56, 66 permanent magnet
18, 58, 68 external wiring
21 second housing
22a positive terminal
22b negative terminal
23, 39, 71, 72, 81, 82, 83 rectifier portion
24 electricity storage portion
38, 84, 85, 86 wiring
51 third housing
61 fourth housing
110H draw hole
130H draw hole
136 storage portion
136a storage end portion
136b recessed portion
AR outer diameter
br outer diameter
CR diameter
dr outer diameter
R lead wire

## Claims

1. A vibration-based power generator (1, 2, 3, 4, 5, 6) comprising:
a first power generation unit (13, 53, 63, 100, 310) that includes at least a tubular shaped member (14, 54, 64) around which a coil (15, 55, 65) is wound and a permanent magnet that is provided such that the permanent magnet (16, 56, 66) can be moved reciprocally in the tubular shaped member;
a rectifier portion (23, 39, 71, 72, 81, 82, 83) that is adapted to rectify electric current;
an electricity storage portion (24) that is adapted to store the electric current from the rectifier portion;
a supply path (18, 58, 68, 84, 85, 86) that is adapted to supply, to the rectifier portion, electric current induced in the coil by the reciprocating motion of the permanent magnet; **characterized in that**:
the vibration-based generator (1, 2, 3, 4, 5, 6) comprises a first housing (11, 51, 61, 311) and a second housing (21); wherein:
the first housing (11, 51, 61, 311) is a housing that houses the first power generation unit, the first housing (11, 51, 61, 311) is conductive, and the first housing (11, 51, 61, 311) includes two electrode terminals (12a, 12b, 12c, 52a, 52b, 62a, 62b) that are conductively connected by being connected to the first housing (11, 51, 61, 311);
the second housing (21) is a housing that houses at least the electricity storage portion and that includes a positive terminal (22a) and a negative terminal (22b);
in a case where one of the electrode terminals (12a, 12b, 12c, 52a, 52b, 62a, 62b) and the negative terminal (22b) are conductively connected, electric power stored in the electricity storage portion via the supply path and the rectifier portion (24) can be supplied to an external device from the other one of the electrode terminals (12a, 12b, 12c, 52a, 52b, 62a, 62b) and the positive terminal (22a), and
in a case where one of the electrode terminals (12a, 12b, 12c, 52a, 52b, 62a, 62b) and the positive terminal (22a) are conductively connected, the electric power stored in the electricity storage portion (24) via the supply path and the rectifier portion can be supplied to the external device from the other one of the electrode terminals (12a, 12b, 12c, 52a, 52b, 62a, 62b) and the negative terminal (22b).

2. The vibration-based power generator according to claim 1, further comprising:
a second power generation unit (33) that is different from the first power generation unit (13, 53, 63, 100, 310) and that includes at least a tubular shaped member (34) around which a coil (35) is wound and a permanent magnet (36) that is provided such that the permanent magnet (36) can be moved reciprocally in the tubular shaped member (34),
wherein
the second power generation unit (33) is housed in the second housing (21).

3. The vibration-based power generator according to claim 1 or 2, wherein
the rectifier portion (23, 39, 71, 72, 81, 82, 83) is housed in the second housing (21).

4. The vibration-based power generator according to claim 3, wherein
the first housing (11, 51, 61, 311) is provided in a plurality, and
the second housing (21) houses the rectifier portion (23, 39, 71, 72, 81, 82, 83) corresponding to each of first power generation units (13, 53, 63, 100, 310) housed in the plurality of first housings.

5. The vibration-based power generator according to claim 1 or 2, wherein
the first housings (11, 51, 61, 311) is provided in a plurality, and
the rectifier portion (23, 39, 71, 72, 81, 82, 83) is housed in each of the plurality of first housings (11, 51, 61, 311).

6. The vibration-based power generator according to any one of claims 1 to 5, wherein
the two electrode terminals (12a, 12b. 12c, 52a, 52b, 62a, 62b) each have the same shape as the positive terminal.

7. The vibration-based power generator according to any one of claims 1 to 6, wherein
a storage portion (136, 360) that is adapted to store the supply path is provided in an internal portion or on an outer periphery of one of the first housing (11, 51, 61, 311) and the second housing (21).

8. The vibration-based power generator according to claim 7, wherein
the storage portion (136, 360) is provided in the internal portion or on the outer periphery of the second housing (21).

9. The vibration-based power generator according to either one of claims 7 and 8, wherein
the storage portion (136, 360) is provided on the outer periphery of one of the first housing (11, 51, 61, 311) and the second housing (21) such that the supply path (18, 58, 68, 84, 85, 86) can be placed, the storage portion (136, 360) having a recessed portion (136b) provided with a groove that is deeper than a diameter of the supply path.

10. The vibration-based power generator according to claim 9, wherein
the one of the first housing (11, 51, 61, 311) and the second housing (21) to which the storage portion (136, 360) is provided has a cylindrical shape, and
the recessed portion of the storage portion (136, 360) is provided along the outer periphery of the one of the first housing (11, 51, 61, 311) and the second housing (21) such that the supply path can be wound thereon.

11. The vibration-based power generator according to any one of claims 7 to 10, wherein
one of a convex portion and a planar portion is formed on at least one end side of a cylindrical shape of the first housing (11, 51, 61, 311),
one of a planar portion and a convex portion is formed on at least one end side of a cylindrical shape of the second housing (21),
the supply path is pulled from one end side, of one housing of the first housing (11, 51, 61, 311) and the second housing (21), on which the convex portion is formed and from one end side, of the other housing of the first housing (11, 51, 61, 311) and the second housing (21), on which the planar portion is formed, and
the storage portion (136, 360) is provided in a vicinity of the one end side from which the supply path is pulled.

## Patentansprüche

1. Vibrationsbasierter Stromgenerator (1, 2, 3, 4, 5, 6), umfassend:
eine erste Stromerzeugungseinheit (13, 53, 63, 100, 310), die mindestens ein rohrförmiges Element (14, 54, 64), um das eine Spule (15, 55, 65) gewickelt ist, und einen Permanentmagneten, der bereitgestellt ist, sodass der Permanentmagnet (16, 56, 66) in dem rohrförmigen Element hin- und herbewegt werden kann, enthält;
einen Gleichrichterabschnitt (23, 39, 71, 72, 81, 82, 83), der angepasst ist, um elektrischen Strom gleichzurichten;
einen Elektrizitätsspeicherabschnitt (24), der angepasst ist, um den elektrischen Strom von dem Gleichrichterabschnitt zu speichern;
einen Zuführungspfad (18, 58, 68, 84, 85, 86), der angepasst ist, um dem Gleichrichterabschnitt elektrischen Strom, der in der Spule von der Hin- und Herbewegung des Permanentmagneten erzeugt wird, zuzuführen; **dadurch gekennzeichnet, dass**:
der vibrationsbasierte Generator (1, 2, 3, 4, 5, 6) ein erstes Gehäuse (11, 51, 61, 311) und ein zweites Gehäuse (21) umfasst; wobei:
das erste Gehäuse (11, 51, 61, 311) ein Gehäuse ist, das die erste Stromerzeugungseinheit aufnimmt, das erste Gehäuse (11, 51, 61, 311) leitend ist und das erste Gehäuse (11, 51, 61, 311) zwei Elektrodenpole (12a, 12b, 12c, 52a, 52b, 62a, 62b) enthält, die leitend verbunden sind, indem sie mit dem ersten Gehäuse (11, 51, 61, 311) verbunden sind;
das zweite Gehäuse (21) ein Gehäuse ist, das mindestens den Elektrizitätsspeicherabschnitt aufnimmt und das einen Pluspol (22a) und einen Minuspol (22b) enthält;
in einem Fall, in dem einer der Elektrodenpole (12a, 12b, 12c, 52a, 52b, 62a, 62b) und der Minuspol (22b) leitend verbunden sind, elektrischer Strom, der in dem Elektrizitätsspeicherabschnitt gespeichert ist, über den Zuführungspfad und den Gleichrichterabschnitt (24) einer externen Vorrichtung von dem anderen der Elektrodenpole (12a, 12b, 12c, 52a, 52b, 62a, 62b) und dem Pluspol (22a) zugeführt werden kann, und
in einem Fall, in dem einer der Elektrodenpole (12a, 12b, 12c, 52a, 52b, 62a, 62b) und der Pluspol (22a) leitend verbunden sind, der elektrische Strom, der in dem Stromspeicherabschnitt (24) gespeichert ist, über den Zuführungspfad und den Gleichrichterabschnitt der externen Vorrichtung von dem anderen der Elektrodenpole (12a, 12b, 12c, 52a, 52b, 62a, 62b) und dem Minuspol (22b) zugeführt werden kann.

2. Vibrationsbasierter Stromgenerator nach Anspruch 1, ferner umfassend:
eine zweite Stromerzeugungseinheit (33), die sich von der ersten Stromerzeugungseinheit (13, 53, 63, 100, 310) unterscheidet und die mindestens ein rohrförmimges Element (34), um das eine Spule (35) gewickelt ist, und einen Permanentmagneten (36), der bereitgestellt ist, sodass der Permanentmagnet (36) in dem rohrförmigen Element (34) hin- und herbewegt werden kann, enthält,
wobei
die zweite Stromerzeugungseinheit (33) in dem zweiten Gehäuse (21) aufgenommen ist.

3. Vibrationsbasierter Stromgenerator nach Anspruch 1 oder 2, wobei
der Gleichrichterabschnitt (23, 39, 71, 72, 81, 82, 83) in dem zweiten Gehäuse (21) aufgenommen ist.

4. Vibrationsbasierter Stromgenerator nach Anspruch 3, wobei
das erste Gehäuse (11, 51, 61, 311) in einer Vielzahl bereitgestellt ist und
das zweite Gehäuse (21) den Gleichrichterabschnitt (23, 39, 71, 72, 81, 82, 83) entsprechend jeder der ersten Stromerzeugungseinheiten (13, 53, 63, 100, 310), die in der Vielzahl von ersten Gehäusen aufgenommen sind, aufnimmt.

5. Vibrationsbasierter Stromgenerator nach Anspruch 1 oder 2, wobei
das erste Gehäuse (11, 51, 61, 311) in einer Vielzahl bereitgestellt ist und
der Gleichrichterabschnitt (23, 39, 71, 72, 81, 82, 83) in jeder der Vielzahl von ersten Gehäusen (11, 51, 61, 311) aufgenommen ist.

6. Vibrationsbasierter Stromgenerator nach einem der Ansprüche 1 bis 5, wobei
die zwei Elektrodenpole (12a, 12b, 12c, 52a, 52b, 62a, 62b) jeweils die gleiche Form wie der Pluspol haben.

7. Vibrationsbasierter Stromgenerator nach einem der Ansprüche 1 bis 6, wobei
ein Speicherabschnitt (136, 360), der angepasst ist, um den Zuführungspfad zu speichern, in einem Innenabschnitt oder an einem Außenumfang von einem des ersten Gehäuses (11, 51, 61, 311) und des zweiten Gehäuses (21) bereitgestellt ist.

8. Vibrationsbasierter Stromgenerator nach Anspruch 7, wobei
der Speicherabschnitt (136, 360) in dem Innenabschnitt oder an dem Außenumfang des zweiten Gehäuses (21) bereitgestellt ist.

9. Vibrationsbasierter Stromgenerator nach einem der Ansprüche 7 und 8, wobei
der Speicherabschnitt (136, 360) an dem Außenumfang von einem des ersten Gehäuses (11, 51, 61, 311) und des zweiten Gehäuses (21) bereitgestellt ist, sodass der Zuführungspfad (18, 58, 68, 84, 85, 86) platziert werden kann, wobei der Speicherabschnitt (136, 360) einen vertieften Abschnitt (136b) aufweist, der mit einer Nut, die tiefer als ein Durchmesser des Zuführungspfads ist, bereitgestellt ist.

10. Vibrationsbasierter Stromgenerator nach Anspruch 9, wobei
das eine des ersten Gehäuses (11, 51, 61, 311) und des zweiten Gehäuses (21), an dem der Speicherabschnitt (136, 360) bereitgestellt ist, eine zylindrische Form aufweist, und
der vertiefte Abschnitt des Speicherabschnitts (136, 360) entlang des Außenumfangs von dem einen des ersten Gehäuses (11, 51, 61, 311) und des zweiten Gehäuses (21) bereitgestellt ist, sodass der Zuführungspfad darauf gewickelt sein kann.

11. Vibrationsbasierter Stromgenerator nach einem der Ansprüche 7 bis 10, wobei
einer von einem konvexen Abschnitt und einem ebenen Abschnitt an mindestens einer Endseite einer zylindrischen Form des ersten Gehäuses (11, 51, 61, 311) gebildet ist,
einer von einem ebenen Abschnitt und einem konvexen Abschnitt an mindestens einer Endseite einer zylindrischen Form des zweiten Gehäuses (21) gebildet ist,
der Zuführungspfad von einer Endseite von einem Gehäuse des ersten Gehäuses (11, 51, 61, 311) und des zweiten Gehäuses (21), an dem der konvexe Abschnitt gebildet ist, und von einer Endseite von dem anderen Gehäuse des ersten Gehäuses (11, 51, 61, 311) und des zweiten Gehäuses (21), an dem der ebene Abschnitt gebildet ist, angezogen wird und
der Speicherabschnitt (136, 360) in der Nähe der einen Endseite, von der der Zuführungspfad angezogen wird, bereitgestellt ist.

## Revendications

1. Générateur électrique à base de vibrations (1, 2, 3, 4, 5, 6) comprenant :
une première unité de génération électrique (13, 53, 63, 100, 310) qui comprend au moins un élément de forme tubulaire (14, 54, 64) autour duquel une bobine (15, 55, 65) est enroulée et un aimant permanent qui est disposé de manière que l'aimant permanent (16, 56, 66) peut être déplacé en va-et-vient dans l'élément de forme tubulaire ;
une partie de rectification (23, 39, 71, 72, 81, 82, 83) qui est conçue pour rectifier un courant électrique ;
une partie de stockage d'électricité (24) qui est conçue pour stocker le courant électrique à partir de la partie de rectification ;
une voie d'alimentation (18, 58, 68, 84, 85, 86) qui est conçue pour fournir, à la partie de rectification, un courant électrique induit dans la bobine par le mouvement de va-et-vient de l'aimant permanent ; **caractérisé en ce que** :
le générateur électrique à base de vibrations (1, 2, 3, 4, 5, 6) comprend un premier boîtier (11, 51, 61, 311) et un deuxième boîtier (21) ;
le premier boîtier (11, 51, 61, 311) étant un boîtier qui loge la première unité de génération électrique, le premier boîtier (11, 51, 61, 311) étant conducteur et le premier boîtier (11, 51, 61, 311) comprenant deux bornes d'électrode (12a, 12b, 12c, 52a, 52b, 62a, 62b) qui sont connectées de manière conductrice en étant connectées au premier boîtier (11, 51, 61, 311) ;
le deuxième boîtier (21) étant un boîtier qui loge au moins la partie de stockage d'électricité et qui comprend une borne positive (22a) et une borne négative (22b) ;
au cas où une des bornes d'électrode (12a, 12b, 12c, 52a, 52b, 62a, 62b) et la borne négative (22b) sont connectées de manière conductrice, une énergie électrique stockée dans la partie de stockage d'électricité par la voie d'alimentation et la partie de rectification (24) peut être fournie à un dispositif externe depuis l'autre des bornes d'électrode (12a, 12b, 12c, 52a, 52b, 62a, 62b) et la borne positive (22a), et
au cas où une des bornes d'électrode (12a, 12b, 12c, 52a, 52b, 62a, 62b) et la borne positive (22a) sont connectées de manière conductrice, l'énergie électrique stockée dans la partie de stockage d'électricité (24) par le biais de la voie d'alimentation et la partie de rectification peut être fournie au dispositif externe depuis l'autre des bornes d'électrode (12a, 12b, 12c, 52a, 52b, 62a, 62b) et la borne négative (22b).

2. Générateur électrique à base de vibrations selon la revendication 1, comprenant en outre :
une deuxième unité de génération électrique (33) qui est différente de la première unité de génération électrique (13, 53, 63, 100, 310) et qui comprend au moins un élément de forme tubulaire (34) autour duquel une bobine (35) est enroulée et un aimant permanent (36) qui est disposé de manière que l'aimant permanent (36) peut être déplacé en va-et-vient dans l'élément de forme tubulaire(34),
la deuxième unité de génération électrique (33) étant logée dans le deuxième boîtier (21).

3. Générateur électrique à base de vibrations selon la revendication 1 ou 2, dans lequel
la partie de rectification (23, 39, 71, 72, 81, 82, 83) est logée dans le deuxième boîtier (21).

4. Générateur électrique à base de vibrations selon la revendication 3, dans lequel
le premier boîtier (11, 51, 61, 311) est disposé dans une pluralité, et
le deuxième boîtier (21) loge la partie de rectification (23, 39, 71, 72, 81, 82, 83) correspondant à chacune de premières unités de génération électrique (13, 53, 63, 100, 310) logées dans la pluralité de premiers boîtiers.

5. Générateur électrique à base de vibrations selon la revendication 1 ou 2, dans lequel
les premiers boîtiers (11, 51, 61, 311) sont disposés dans une pluralité, et
la partie de rectification (23, 39, 71, 72, 81, 82, 83) est logée dans chacun de la pluralité de premiers boîtiers (11, 51, 61, 311).

6. Générateur électrique à base de vibrations selon l'une quelconque des revendications 1 à 5, dans lequel
les deux bornes d'électrode (12a, 12b, 12c, 52a, 52b, 62a, 62b) présentent chacune la même forme que la borne positive.

7. Générateur électrique à base de vibrations selon l'une quelconque des revendications 1 à 6, dans lequel
une partie de stockage (136, 360) qui est conçue pour stocker la voie d'alimentation est disposée dans une partie interne ou sur une périphérie externe du premier boîtier (11, 51, 61, 311) ou du deuxième boîtier (21).

8. Générateur électrique à base de vibrations selon la revendication 7, dans lequel
la partie de stockage (136, 360) est disposée dans la partie interne ou sur la périphérie externe du deuxième boîtier (21).

9. Générateur électrique à base de vibrations selon l'une quelconque des revendications 7 et 8, dans lequel
la partie de stockage (136, 360) est disposée sur la périphérie externe du premier boîtier (11, 51, 61, 311) ou du deuxième boîtier (21) de manière que la voie d'alimentation (18, 58, 68, 84, 85, 86) peut être placée, la partie de stockage (136, 360) présentant une partie évidée (136b) dotée d'une rainure qui est plus profonde qu'un diamètre de la voie d'alimentation.

10. Générateur électrique à base de vibrations selon la revendication 9, dans lequel
celui du premier boîtier (11, 51, 61, 311) ou du deuxième boîtier (21) auquel la partie de stockage (136, 360) est fournie présente une forme cylindrique, et
la partie évidée de la partie de stockage (136, 360) est disposée le long de la périphérie externe de celui du premier boîtier (11, 51, 61, 311) ou du deuxième boîtier (21) de manière que la voie d'alimentation peut être enroulée sur celle-ci.

11. Générateur électrique à base de vibrations selon l'une quelconque des revendications 7 à 10, dans lequel
une partie convexe ou une partie plane est formée sur au moins un côté d'extrémité d'une forme cylindrique du premier boîtier (11, 51, 61, 311),
une partie plane ou une partie convexe est formée sur au moins un côté d'extrémité d'une forme cylindrique du deuxième boîtier (21),
la voie d'alimentation est tirée depuis un côté d'extrémité, d'un boîtier du premier boîtier (11, 51, 61, 311) ou du deuxième boîtier (21), sur lequel la partie convexe est formée et depuis un côté d'extrémité, de l'autre boîtier du premier boîtier (11, 51, 61, 311) ou du deuxième boîtier (21), sur lequel la partie plane est formée, et
la partie de stockage (136, 360) est disposée à proximité de l'autre côté d'extrémité depuis lequel la voie d'alimentation est tirée.
